# EUROPÄISCHE PATENTSCHRIFT

(11) **EP 1 166 915 B1**
(45) Veröffentlichungstag und Bekanntmachung des Hinweises auf die Patenterteilung: **03.11.2004**
(21) Anmeldenummer: 01115265.9
(22) Anmeldetag: 23.06.2001
(51) Int. Cl.: B21D 28/06, F16J 15/08

(54) **Vorrichtung und Verfahren zum Herstellen von Dichtungslagen**
Device and method for producing gaskets
Dispositif et procédé de fabrication des joints d' étanchéité

(30) Priorität: 30.06.2000 DE 10031095
(43) Veröffentlichungstag der Anmeldung: 02.01.2002
(60) Teilanmeldung: 03028544.9
(73) Patentinhaber: ElringKlinger AG, 72581 Dettingen (DE)
(72) Erfinder: Fritz, Wolfgang, 72555 Metzingen 3 (DE)
(74) Vertreter: HOEGER, STELLRECHT & PARTNER Patentanwälte

(56) Entgegenhaltungen:
- EP-A- 0 338 537
- EP-A- 0 676 279
- DE-C- 884 936
- US-A- 4 344 342
- US-A- 4 648 607
- US-A- 4 826 708
- PATENT ABSTRACTS OF JAPAN vol. 1995, no. 05, 30. Juni 1995 (1995-06-30) -& JP 07 035239 A (TAIHO KOGYO CO LTD), 7. Februar 1995 (1995-02-07)
- PATENT ABSTRACTS OF JAPAN vol. 018, no. 569 (M-1695), 31. Oktober 1994 (1994-10-31) & JP 06 207673 A (ISHINO GASKET KOGYO KK), 26. Juli 1994 (1994-07-26)

## Beschreibung

Die vorliegende Erfindung betrifft eine Vorrichtung zum Herstellen von Dichtungslagen für ein- oder mehrlagige Dichtungen aus jeweils einem Dichtungslagenabschnitt eines mehrere zusammenhängende Dichtungslagenabschnitte umfassenden Ausgangsmaterials, umfassend ein Folgeverbundwerkzeug mit mehreren längs einer Vorschubrichtung aufeinanderfolgenden Bearbeitungsstationen, in welchen die Dichtungslagenabschnitte während Arbeitstakten bearbeitet werden, wobei mindestens eine der Bearbeitungsstationen als eine Außenkonturlinien-Schneidstation ausgebildet ist, in welche mittels eines Außenkonturlinien-Schneidwerkzeugs einander zugewandte Außenkonturlinien zweier benachbarter Dichtungslagen geschnitten werden, und eine Vorschubvorrichtung, durch welche die Dichtungslagenabschnitte zwischen zwei Arbeitstakten um eine Vorschubstrecke v längs der Vorschubrichtung weiterbewegt werden.

Solche Vorrichtungen sind aus dem Stand der Technik bekannt.

Durch die Zusammenfassung mehrerer Bearbeitungsschritte in einem Folgeverbundwerkzeug werden die Werkzeugkosten gegenüber der Verwendung von Einzelwerkzeugen gesenkt und die Durchlaufzeiten der Dichtungslagenabschnitte durch die Bearbeitungsstationen verringert.

Bei den bekannten Vorrichtungen der eingangs genannten Art ist die Vorschubstrecke v größer als die Ausdehnung b der Außenkontur einer fertigen Dichtungslage längs der Vorschubrichtung, so daß zwischen der Hinterkante einer in der Vorschubrichtung vorne liegenden Dichtungslage und der Vorderkante einer in der Vorschubrichtung dahinter liegenden Dichtungslage ein Absand v-b eingehalten wird.

Dieser Abstand zwischen längs der Vorschubrichtung aufeinanderfolgenden Dichtungslagen hat zur Folge, daß das zwischen den einander zugewandten Außenkonturlinien zweier einander benachbarter Dichtungslage angeordnete Ausgangsmaterial ungenutzt bleibt. Außerdem müssen die einander zugewandten Außenkonturlinien zweier benachbarter Dichtungslagen mittels zweier verschiedener Schneidkanten geschnitten werden.

Die DE 884 936 C offenbart ein Verfahren und eine Vorrichtung zur Herstellung von mit seitlich vorspringenden Haken oder dergleichen versehenen Möbelbeschlagteilen, wobei die Beschlagteile mit ihren Längskanten mittels eines mit zwei der Form der Haken entsprechend vorspringenden Schneiden versehenen Stempels von einem der Höhe oder Länge der Beschlagteile entsprechend breit bemessenen Bandeisen- oder Blechstreifen abgetrennt werden, so daß durch die vorspringenden Haken des abgetrennten Werkstücks in dem Rücken des nachfolgenden Werkstücks entsprechend geformte Aussparungen entstehen oder umgekehrt.

Der vorliegenden Erfindung liegt die Aufgabe zugrunde, eine Vorrichtung der eingangs genannten Art zu schaffen, bei welcher die Außenkonturlinien der Dichtungslagen mit geringerem Aufwand sauber geschnitten werden und das Ausgangsmaterial besser verwertet werden kann.

Diese Aufgabe wird durch eine Vorrichtung gemäß Anspruch 1 gelöst. Das Folgeverbundwerkzeug der erfindungsgemäßen Vorrichtung kommt mit einem einfach aufgebauten Außenkonturlinien-Schneidwerkzeug aus, welches für jedes Paar einander benachbarter Dichtungslagen nur eine einzige Schneidkante umfaßt.

Da das Außenkonturlinien-Schneidwerkzeug zum Trennen des Paars einander benachbarter Dichtungslagen nur längs einer Schneidkante schneidet, ist die Kraft, mit welcher das Außenkonturlinien-Schneidwerkzeug gegen das Ausgangsmaterial geführt werden muß, kleiner als bei den bekannten Folgeverbundwerkzeugen, bei welchen das Außenkonturlinien-Schneidwerkzeug für jedes Paar einander benachbarter Dichtungslagen mindestens zwei Schneidkanten aufweisen muß. Aufgrund der verringerten Schneidkraft nimmt auch die Lärmentwicklung beim Schneiden der Außenkonturlinien ab.

Ferner liegen bei der erfindungsgemäßen Vorrichtung die einander zugewandten Außenkonturlinien zweier einander benachbarter Dichtungslagen unmittelbar aneinander an, so daß kein Verschnitt zwischen den einander benachbarten Dichtungslagen entsteht und das Ausgangsmaterial besser ausgenutzt wird.

Die Dichtungslagen können insbesondere Dichtungsbleche sein, die aus einem metallischen Ausgangsmaterial hergestellt werden und aus denen eine ein- oder mehrlagige Metalldichtung gebildet wird.

Die Dichtungslagen können aber auch aus einem Weichstoff hergestellt und zur Bildung einer ein- oder mehrlagigen Weichstoffdichtung verwendet werden.

Dabei kann vorgesehen sein, daß aus jedem Dichtungslagenabschnitt jeweils eine einzige fertige Dichtungslage hergestellt wird. In diesem Fall ist die Vorschubstrecke v im wesentlichen gleich groß wie die Ausdehnung b der Außenkontur dieser fertigen Dichtungslage längs der Vorschubrichtung.

Es kann aber auch vorgesehen sein, daß aus jedem Dichtungslagenabschnitt des Ausgangsmaterials eine mehrere einzelne Dichtungslagen umfassende Gruppe von Dichtungslagen hergestellt wird. In diesem Fall ist die Vorschubstrecke v im wesentlichen gleich groß wie die Ausdehnung b der Außenkontur der Gruppe von fertigen Dichtungslagen. Die Ausdehnung der Außenkontur der Gruppe von fertigen Dichtungslagen kann dabei größer sein als die Ausdehnung der Außenkontur einer einzelnen Dichtungslage aus der Gruppe von Dichtungslagen.

Die Dichtungslagen einer Dichtungslagengruppe können einander gleiche oder voneinander verschiedene Außenkonturen aufweisen.

Auch wenn die Dichtungslagen einer Dichtungslagengruppe einander gleiche Außenkonturen aufweisen, so können sie in dem Dichtungslagenabschnitt in gleicher oder in voneinander verschiedener Ausrichtung angeordnet sein. Insbesondere kann vorgesehen sein, daß zwei einander benachbarte Dichtungslagen derselben Dichtungslagengruppe im wesentlichen punktsymmetrisch zueinander ausgebildet und angeordnet sind.

Die beiden einander benachbarten Dichtungslagen, deren Außenkonturlinien erfindungsgemäß mit derselben Schneidkante geschnitten werden, können derselben Gruppe von Dichtungslagen oder aber zwei aufeinanderfolgenden Gruppen von Dichtungslagen angehören.

Die zu derselben Gruppe von Dichtungslagen gehörenden Dichtungslagen können in der Außenkonturlinien-Schneidstation oder in einer vor oder hinter der Außenkonturlinien-Schneidstation liegenden weiteren Bearbeitungsstation des Folgeverbundwerkzeugs voneinander getrennt werden.

Bei der erfindungsgemäßen Vorrichtung ist vorgesehen, daß mindestens eine der Bearbeitungsstationen als Freischneidstation ausgebildet ist, die in der Vorschubrichtung vor der Außenkonturlinien-Schneidstation angeordnet ist und in der aus dem Ausgangsmaterial mindestens eine Freischneidfläche herausgeschnitten wird, in welche die Schneidkante des Außenkonturlinien-Schneidwerkzeugs der Au-Benkonturlinien-Schneidstation beim Schneidvorgang eintaucht. Durch dieses Freischneiden wird erreicht, daß die Außenkonturlinien der Dichtungslagen in der Außenkonturlinien-Schneidstation sauber und ohne unerwünschte Verformungen der Ränder der Dichtungslagen geschnitten werden können.

Ferner ist das Freischneidwerkzeug der Freischneidstation vorteilhafterweise so ausgebildet, daß der Rand der Freischneidfläche quer zu den von dem Außenkonturlinien-Schneidwerkzeug geschnittenen Außenkonturlinien verläuft. Dadurch ist es möglich, in der Freischneidstation solche Schneidstempel zu verwenden, die einen abgerundeten Verlauf ihrer Schneidkante aufweisen.

Solche Freischneidstempel sind einfach herzustellen und unterliegen nur einem geringen Verschleiß.

Allerdings entsteht dadurch, daß der Rand der Freischneidfläche quer zu den von dem Außenkonturlinien-Schneidwerkzeug geschnittenen Außenkonturlinien verläuft, ein scharfkantiger Übergang zwischen den in der Freischneidstation geschnittenen Freischneidlinien einerseits und den in der Außenkonturlinien-Schneidstation geschnittenen Außenkonturlinien andererseits mit einer Ecke an der Stelle, an der die vorstehend genannten Linien aneinanderstoßen.

Vorzugsweise verläuft der Rand der Freischneidfläche im wesentlichen senkrecht zu den von dem Außenkonturlinien-Schneidwerkzeug geschnittenen Außenkonturlinien.

Bei einer bevorzugten Ausgestaltung der erfindungsgemäßen Vorrichtung ist vorgesehen, daß die Außenkonturlinien-Schneidstation als Trennstation ausgebildet ist, in welcher die einander benachbarten Dichtungslagen vollständig voneinander getrennt werden.

Diese als Trennstation ausgebildete Außenkonturlinien-Schneidstation kann insbesondere die in der Vorschubrichtung letzte Bearbeitungsstation des Folgeverbundwerkzeugs sein.

Eine saubere Trennung der einander zugewandten Außenkonturlinien zweier einander benachbarter Dichtungslagen wird vorteilhafterweise dadurch erzielt, daß die die Schneidkante bildenden Flächen des Außenkonturlinien-Schneidwerkzeugs miteinander einen Winkel von ungefähr 90° einschließen.

Die vorliegende Erfindung betrifft ferner ein Verfahren zum Herstellen von Dichtungslagen für ein- oder mehrlagige Dichtungen aus jeweils einem Dichtungslagenabschnitt eines mehrere zusammenhängende Dichtungslagenabschnitte umfassenden Ausgangsmaterials, bei dem die Dichtungslagenabschnitte in einem Folgeverbundwerkzeug mit mehreren längs einer Vorschubrichtung aufeinanderfolgenden Bearbeitungsstationen während Arbeitstakten bearbeitet werden, wobei mindestens eine der Bearbeitungsstationen als eine Außenkonturlinien-Schneidstation ausgebildet ist, in welcher mittels eines Außenkonturlinien-Schneidwerkzeugs einander zugewandte Außenkonturlinien zweier einander benachbarter Dichtungslagen geschnitten werden, und bei dem die Dichtungslagenabschnitte zwischen zwei Arbeitstakten mittels einer Vorschubvorrichtung um eine Vorschubstrecke v längs der Vorschubrichtung weiterbewegt werden.

Der vorliegenden Erfindung liegt die weitere Aufgabe zugrunde, ein Verfahren der vorstehend genannten Art zu schaffen, bei dem die Außenkonturlinien der Dichtungslagen mit geringerem Aufwand sauber geschnitten werden und das Ausgangsmaterial besser genutzt wird als bei den bekannten Verfahren.

Diese Aufgabe wird durch ein Verfahren gemäß Anspruch 8 gelöst. Die Vorteile des erfindungsgemäßen Verfahrens wurden bereits vorstehend im Zusammenhang mit der erfindungsgemäßen Vorrichtung erläutert.

Besondere Ausgestaltungen des erfindungsgemäßen Verfahrens sind Gegenstände der abhängigen Ansprüche 9 bis 16, deren Vorteile ebenfalls bereits vorstehend im Zusammenhang mit besonderen Ausgestaltungen der erfindungsgemäßen Vorrichtung erläutert worden sind.

Wird bei der Herstellung der Dichtungslage ein Freischneidwerkzeug mit abgerundeter, eckenfreier Schneidkante verwendet, so umfaßt die Außenkontur der Dichtungslage eine von dem Freischneidwerkzeug geschnittene Freischneidlinie und eine von dem Außenkonturlinien-Schneidwerkzeug geschnittene Außenkonturlinie, die zusammen eine Ecke einschließen.

Um die Gefahr einer Verletzung bei der Handhabung einer Dichtung mit einer solchen Dichtungslage auszuschließen, kann vorteilhafterweise vorgesehen sein, daß die Dichtung mindestens eine weitere Dichtungslage umfaßt, welche über die Ecke an der ersten Dichtungslage übersteht.

Ergänzend oder alternativ hierzu kann vorgesehen sein, daß die Dichtung mindestens eine weitere Dichtungslage umfaßt, welche einen dem Verlauf der Außenkonturlinie oder dem Verlauf der Freischneidlinie folgenden Außenkonturlinienabschnitt umfaßt, an welchen sich im Bereich der Ecke der ersten Dichtungslage ein zweiter Außenkonturlinienabschnitt glatt anschließt.

Die weitere Dichtungslage der Dichtung kann insbesondere mittels eines Folgeverbundwerkzeugs hergestellt sein, bei welchem die Vorschubstrecke v größer ist als die Ausdehnung b der Außenkontur der fertigen Dichtungslage längs der Vorschubrichtung.

Weitere Merkmale und Vorteile der Erfindung sind Gegenstand der nachfolgenden Beschreibung und zeichnerischen Darstellung von Ausführungsbeispielen.

In den Zeichnungen zeigen:
- Fig. 1: eine schematische Prinzipdarstellung eines Folgeverbundwerkzeugs zum Herstellen von Dichtungsblechen für Metalldichtungen;
- Fig. 2: eine schematische Darstellung der aufeinanderfolgenden Bearbeitungsschritte in einem herkömmlichen Folgeverbundwerkzeug;
- Fig. 3: eine schematische Darstellung der aufeinanderfolgenden Bearbeitungsschritte in einem Folgeverbundwerkzeug, in welchem die einander zugewandten Außenkonturlinien einander benachbarter Dichtungsbleche mit derselben Schneidkante geschnitten werden und bei dem die Vorschubstrecke gleich groß ist wie die Ausdehnung eines fertigen Dichtungsblechs längs der Vorschubrichtung;
- Fig. 4: eine schematische Draufsicht auf eine mehrlagige Metalldichtung;
- Fig. 5: eine vergrößerte Darstellung des Bereichs I aus Fig. 4;
- Fig. 6: einen schematischen Längsschnitt durch die Dichtung aus den Fig. 4 und 5 längs der Linie 6-6 in Fig. 5;
- Fig. 7: einen schematischen Längsschnitt durch einen Trennstempel eines Folgeverbundwerkzeugs; und
- Fig. 8: eine schematische Darstellung der aufeinanderfolgenden Bearbeitungsschritte in einem Folgeverbundwerkzeug, in welchem die einander zugewandten Außenkonturlinien einander benachbarter Dichtungsbleche mit derselben Schneidkante geschnitten werden und bei dem die Vorschubstrecke gleich groß ist wie die Ausdehnung einer Gruppe von fertigen Dichtungsblechen längs der Vorschubrichtung.

Gleiche oder funktional äquivalente Elemente sind in allen Figuren mit denselben Bezugszeichen bezeichnet.

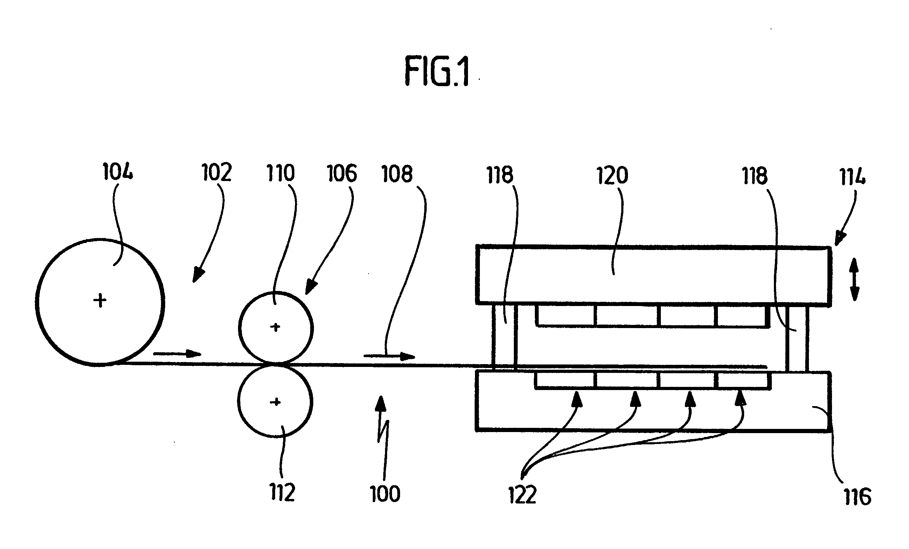

Eine in Fig. 1 schematisch dargestellte, als Ganzes mit 100 bezeichnete Vorrichtung zum Herstellen von Dichtungsblechen für Metalldichtungen umfaßt eine Ausgangsmaterial-Zuführvorrichtung 102, welche ihrerseits eine (nicht dargestellte) Halterung zum drehbaren Haltern einer Blechrolle 104 und eine Vorschubvorrichtung 106 umfaßt, welche taktweise arbeitet und das von der Blechrolle 104 abgezogene Blech während eines Vorschubtaktes um eine vorgegebene Vorschubstrecke längs der Vorschubrichtung 108 fördert.

Die Vorschubvorrichtung 106 kann beispielsweise eine Antriebswalze 110 und eine parallel zu derselben angeordnete Andruckwalze 112 umfassen, wobei das zu fördernde Blech den Spalt zwischen der Antriebswalze 110 und der Andruckwalze 112 durchläuft und durch die Reibung mit der Mantelfläche der Antriebswalze 110, die sich während eines Vorschubtaktes dreht, längs der Vorschubrichtung 108 vorwärts bewegt wird.

Die Vorschubvorrichtung 106 fördert das Blech als Ausgangsmaterial in ein als Ganzes mit 114 bezeichnetes Folgeverbundwerkzeug, welches ein stationäres Werkzeug-Unterteil 116 und ein Werkzeug-Oberteil 120 umfaßt, das an vertikalen Führungsstangen 118 verschieblich geführt und mittels einer (nicht dargestellten) mechanischen, pneumatischen oder hydraulischen Bewegungseinrichtung relativ zu dem stationären Werkzeug-Unterteil 116 verfahrbar ist.

Das Folgeverbundwerkzeug 114 umfaßt mehrere längs der Vorschubrichtung 108 aufeinanderfolgende Bearbeitungsstationen 122, welche jeweils an dem Werkzeug-Unterteil 116 und/oder an dem Werkzeug-Oberteil 120 angeordnete Bearbeitungswerkzeuge, wie beispielsweise Stanz-, Präge- oder Schneidwerkzeuge aufweisen.

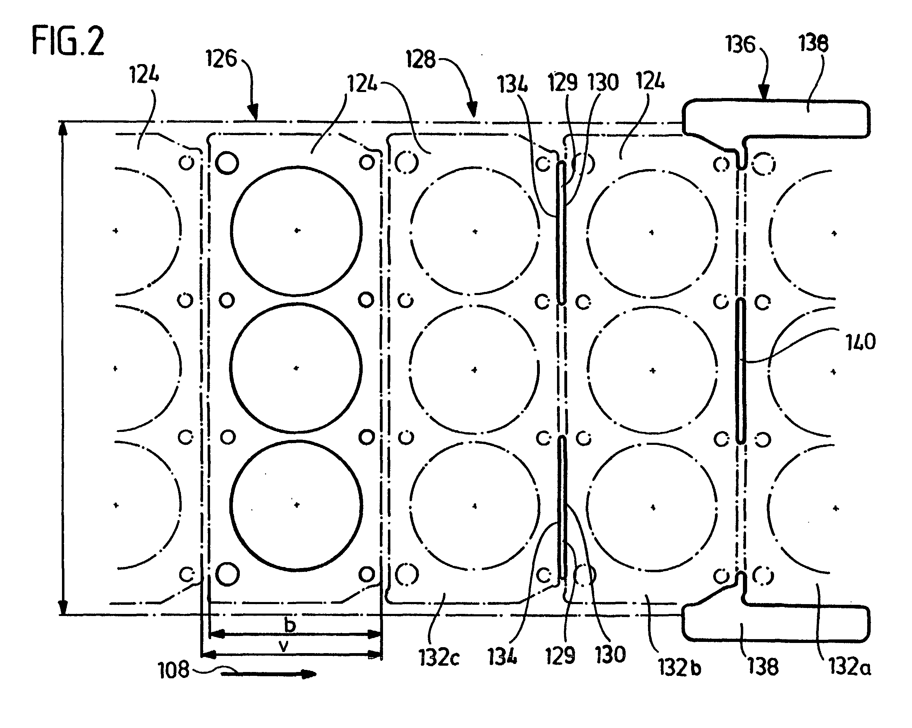

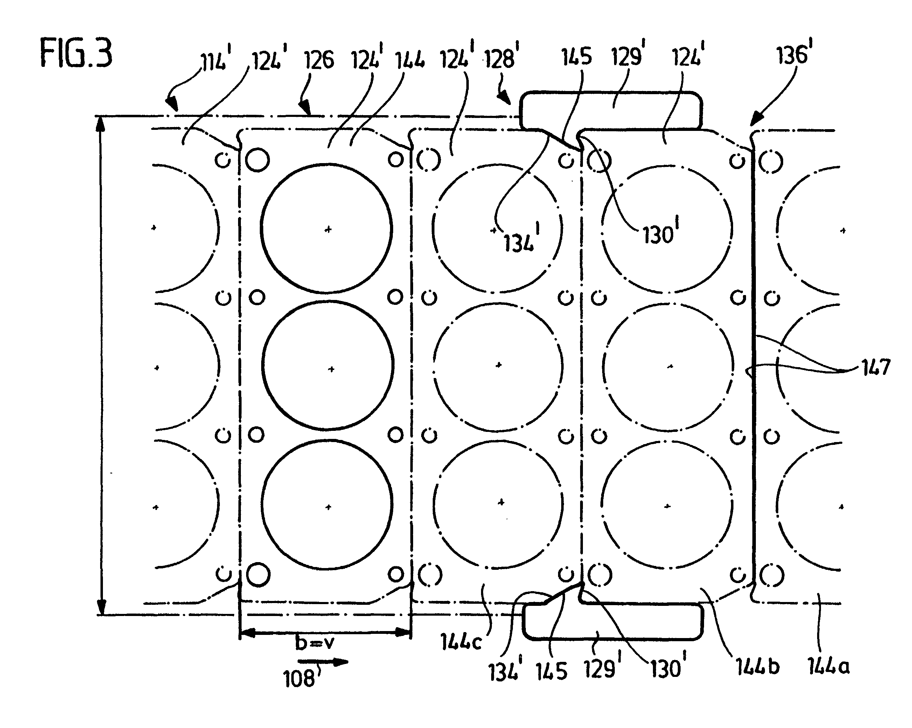

Während eines Arbeitstaktes des Folgeverbundwerkzeugs 114 wird das Werkzeug-Oberteil 120 von oben gegen das auf dem Werkzeug-Unterteil 116 aufliegende Blech gefahren, wobei die in den aufeinanderfolgenden Bearbeitungsstationen 122 befindlichen Dichtungsblechabschnitte 124 (siehe Fig. 2 und 3) gleichzeitig von den in den jeweiligen Bearbeitungsstationen 122 angeordneten Werkzeugen bearbeitet, das heißt beispielsweise gelocht, geprägt oder geschnitten, werden.

Um die Dichtungsblechabschnitte relativ zu den Bearbeitungsstationen 122 genau zu positionieren, kann dabei vorgesehen sein, daß in einer ersten Bearbeitungsstation in jeden Dichtungsblechabschnitt ein oder mehrere Positionslöcher eingestanzt werden und daß jede der nachfolgenden Bearbeitungsstationen eine entsprechende Anzahl von Positionierstiften am Werkzeug-Oberteil 120 aufweist, welche bei der Abwärtsbewegung des Werkzeug-Unterteils 116 in die jeweils zugeordneten Positionslöcher eingreifen und so die Dichtungsblechabschnitte 124 in die gewünschte Lage relativ zur jeweiligen Bearbeitungsstation 122 bringen und in dieser Lage festhalten.

Beim Zurückbewegen des Werkzeug-Oberteils 120 in seine obere Ausgangslage treten die Positionierstifte wieder aus den zugeordneten Positionierlöchern heraus. Damit ist ein Arbeitstakt des Folgeverbundwerkzeugs 114 abgeschlossen.

Im darauffolgenden Vorschubtakt des Folgeverbundwerkzeugs 114 wird das Blech und damit jeder der Dichtungsblechabschnitte 124 um die vorgegebene Vorschubstrecke, welche der Breite eines Dichtungsblechabschnitts 124 entspricht, mittels der Vorschubvorrichtung 106 längs der Vorschubrichtung 108 vorwärtsbewegt.

Wenn sich das Blech nach Abschluß des Vorschubs wieder in Ruhe befindet, beginnt der nächste Arbeitstakt des Folgeverbundwerkzeugs 114 mit dem Absenken des Werkzeug-Oberteils 120.

Fig. 2 zeigt schematisch die aufeinanderfolgenden Bearbeitungsschritte in einem herkömmlichen Folgeverbundwerkzeug, bei welchem die Vorschubstrecke v und damit die Breite der Dichtungsblechabschnitte 124 größer ist als die Breite b der Außenkontur des fertigen Dichtungsblechs, das heißt die Ausdehnung eines fertigen Dichtungsblechs b längs der Vorschubrichtung 108.

In einer als Lochstation 126 ausgebildeten ersten Bearbeitungsstation wird der während eines Arbeitstaktes darin befindliche Dichtungsblechabschnitt 124 mittels geeigneter Stanzstempel gelocht, das heißt mit den erforderlichen Durchgangsöffnungen (z.B. Brennraumöffnungen und Öffnungen für Wasser- und Ölkanäle) versehen.

In einer längs der Vorschubrichtung 108 auf die Lochstation 126 folgenden zweiten Bearbeitungsstation, die als Freischneidstation 128 ausgebildet ist, werden mittels (beispielsweise) zweier Freischneidstempel zwei Freischneidflächen 129 aus dem Blech herausgeschnitten, deren vordere Ränder 130 Außenkonturlinien eines in der Vorschubrichtung 108 weiter vorn liegenden Dichtungsblechs 132b bilden, während deren hintere Ränder 134 Außenkonturlinien eines in der Vorschubrichtung 108 weiter hinten liegenden Dichtungsblechs 132c bilden.

Die vorderen Ränder 130 und die hinteren Ränder 134 werden in der Freischneidstation 128 zwar zur gleichen Zeit, jedoch von verschiedenen, längs der Vorschubrichtung 108 um die Strecke v-b voneinander beabstandeten Schneidkanten der Freischneidstempel geschnitten.

In einer auf die Freischneidstation 128 folgenden Trennstation 136 werden mittels (beispielsweise) dreier Trennstempel das in der Vorschubrichtung 108 weiter vorn liegende Dichtungsblech 132a und das in der Vorschubrichtung 108 weiter hinten liegende Dichtungsblech 132b vollständig voneinander getrennt.

Die von den Trennstempeln der Trennstation 136 aus dem Blech herausgestanzten seitlichen Trennflächen 138 und die mittlere Trennfläche 140 überlappen dabei die von den Freischneidstempeln der Freischneidstation 128 herausgeschnittenen Freischneidflächen 129 so, daß die von den Freischneidstempeln und von den Trennstempeln geschnittenen Außenkonturlinien glatt und ohne Ausbildung von Ecken aneinander anschließen.

Auch die von den Trennstempeln der Trennstation 136 geschnittenen Außenkonturlinien der einander benachbarten Dichtungsbleche 132a, 132b werden von verschiedenen Schneidkanten geschnitten, welche voneinander mindestens um die Strecke v-b beabstandet sind.

Zusätzlich zu den vorstehend beschriebenen können in dem Folgeverbundwerkzeug 114 noch weitere Bearbeitungsstationen 122, beispielsweise Prägestationen, vorgesehen sein.

Ferner können zwischen zwei aufeinanderfolgenden Bearbeitungsstationen 122 auch Leerstationen vorgesehen sein, in welchen das Blech nicht bearbeitet wird.

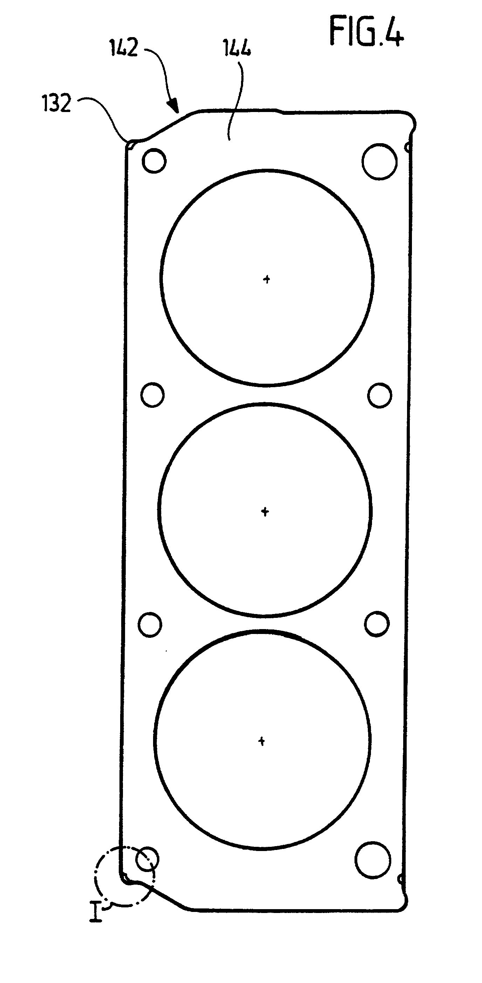

Das mit dem vorstehend beschriebenen Folgeverbundwerkzeug 114 hergestellte Dichtungsblech 132 weist eine abgerundete, eckenfreie Außenkontur auf und wird als mittlere Lage einer in den Fig. 4 bis 6 dargestellten dreilagigen Metalldichtung 142 verwendet.

Fig. 3 zeigt schematisch die aufeinanderfolgenden Bearbeitungsschritte in einem modifizierten Folgeverbundwerkzeug 114', bei welchem die Vorschubstrecke v gleich groß ist wie die Breite b der Außenkontur eines fertigen Dichtungsblechs 144, das heißt gleich groß wie die Ausdehnung des fertigen Dichtungsblechs 144 längs der Vorschubrichtung 108.

Auch dieses modifizierte Folgeverbundwerkzeug 114' umfaßt eine als Lochstation 126 ausgebildete erste Bearbeitungsstation, in welcher mittels geeigneter Stanzstempel die erforderlichen Durchgangsöffnungen in dem Dichtungsblech 144 erzeugt werden.

In einer längs der Vorschubrichtung 108 auf die Lochstation 126 folgenden zweiten Bearbeitungsstation, die als Freischneidstation 128' ausgebildet ist, werden mittels (beispielsweise) zweier Freischneidstempel zwei seitliche Freischneidflächen 129' aus dem Blech herausgeschnitten, deren vordere Ränder 130' Außenkonturlinien eines in der Vorschubrichtung 108 weiter vorn liegenden Dichtungsblechs 144b bilden, während deren hintere Ränder 134' Außenkonturlinien eines in der Vorschubrichtung 108 weiter hinten liegenden Dichtungsblechs 144c bilden.

In einer auf die Freischneidstation 128' folgenden Trennstation 136' werden mittels eines Trennstempels das in der Vorschubrichtung 108 weiter vorn liegende Dichtungsblech 144a und das in der Vorschubrichtung 108 weiter hinten liegende Dichtungsblech 144b vollständig voneinander getrennt.

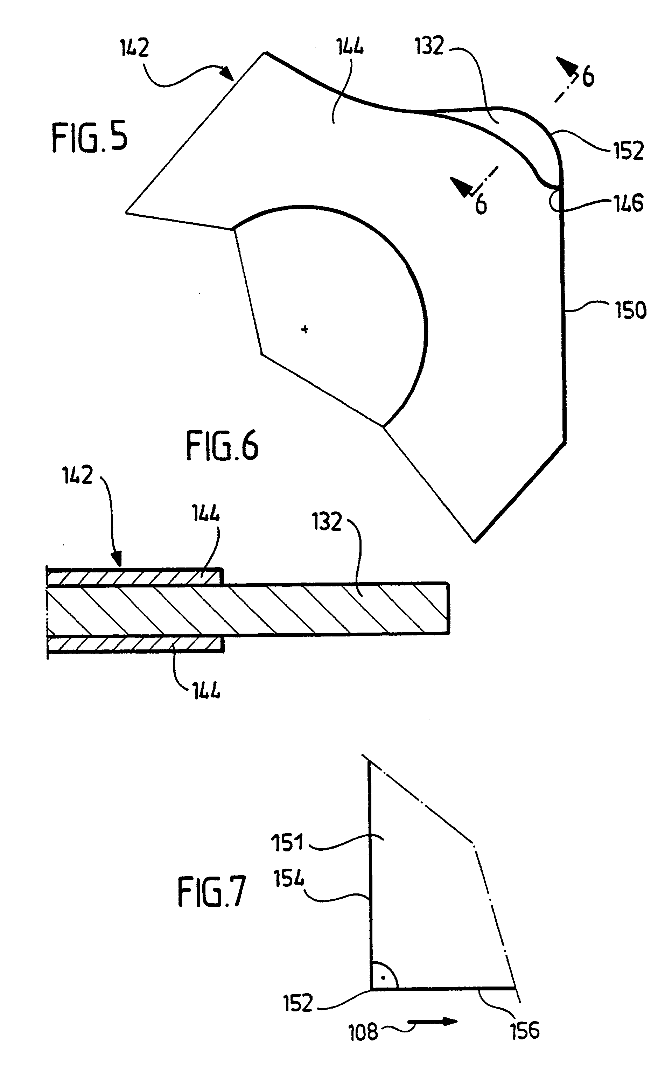

Der Trennstempel 151 der Trennstation 136' weist nur eine einzige (beispielsweise) geradlinige Schneidkante 152 auf, wobei die die Schneidkante 152 bildenden Flächen 154 und 156 des Trennstempels 151 miteinander einen Winkel von ungefähr 90° einschließen (siehe Fig. 7).

Da die miteinander zusammenfallenden Außenkonturlinien 147 der einander benachbarten Dichtungsbleche 144a, 144b von ein und derselben Schneidkante geschnitten werden, ist die für die Trennung der Dichtungsbleche 144a, 144b aufzuwendende Schneidkraft und die beim Schneiden auftretende Lärmentwicklung geringer als bei den Freischneidstempeln der Freischneidstation 128 und bei dem mittleren Trennstempel der Trennstation 136 des herkömmlichen Folgeverbundwerkzeugs 114, welche jeweils zwei verschiedene, um die Strecke v-b voneinander beabstandete Schneidkanten aufweisen.

Die Schneidkante des Trennstempels der Trennstation 136' des Folgeverbundwerkzeugs 114' taucht beim Trennvorgang in die von der Freischneidstation 128' geschnittenen seitlichen Freischneidflächen 129' ein, so daß die Außenkonturlinien 147 der Dichtungsbleche 144a, 144b sauber geschnitten werden und die Ränder der Dichtungsbleche 144a, 144b nicht verbogen werden.

Die Ränder der seitlichen Freischneidflächen 129' verlaufen im wesentlichen senkrecht zu den von dem Trennstempel der Trennstation 136' geschnittenen Außenkonturlinien der Dichtungsbleche 144a, 144b. Dadurch ist es möglich, in der Freischneidstation 129' solche Freischneidstempel zu verwenden, die einen abgerundeten, eckenfreien Verlauf ihrer Schneidkanten aufweisen.

Um die von dem Trennstempel der Trennstation 136' geschnittenen Außenkonturlinien 147 glatt, das heißt ohne Ausbildung von Ecken, an die Ränder der seitlichen Freischneidflächen 129' anschließen zu lassen, müßten sich die Freischneidstempel der Freischneidstation 128' hingegen sehr stark verjüngen, um zwei tangential zueinander verlaufende Schneidkanten auszubilden. Solche Freischneidstempel wären jedoch nur schwierig herzustellen und würden einem hohen Verschleiß unsterliegen. Dieser Nachteil wird bei dem Folgeverbundwerkzeug 114' dadurch vermieden, daß die Ränder der seitlichen Freischneidflächen 129' quer, vorzugsweise im wesentlichen senkrecht, zu den von dem Trennstempel der Trennstation 136' geschnittenen Außenkonturlinien 147 verlaufen.

Allerdings entsteht durch diese Maßnahme an dem fertigen Dichtungsblech 144' ein scharfkantiger Übergang zwischen den von den Freischneidstempeln der Freischneidstation 128' geschnittenen Freischneidlinien 145 einerseits und der von dem Trennstempel der Trennstation 136' geschnittenen Außenkonturlinie 147 andererseits mit einer Ecke 146 an der Stelle, an der die vorstehend genannten Linien aneinanderstoßen.

Auch in dem Folgeverbundwerkzeug 114' können zusätzlich zu den vorstehend beschriebenen noch weitere Bearbeitungsstationen 122, beispielsweise Prägestationen, vorgesehen sein.

Ferner können auch in dem Folgeverbundwerkzeug 114' zwischen zwei aufeinanderfolgenden Bearbeitungsstationen 122 Leerstationen vorgesehen sein, in welchen das Blech nicht bearbeitet wird.

Mit dem vorstehend beschriebenen Folgeverbundwerkzeug 114' hergestellte Dichtungsbleche 144 werden als die obere und als die untere Decklage der in den Fig. 4 bis 6 dargestellten dreilagigen Metalldichtung 142 verwendet und mit dem die mittlere Lage bildenden Dichtungsblech 132, beispielsweise durch Verschweißen oder mittels Nieten, verbunden.

Wie aus Fig. 5 zu ersehen ist, sind die Dichtungsbleche 132 und 144 so ausgebildet und in der Metalldichtung 142 so relativ zueinander ausgerichtet, daß die Außenkontur des Dichtungsblechs 132 einen ersten Außenkonturlinienabschnitt 150 aufweist, welcher dem Verlauf der von dem Trennstempel der Trennstation 136' geschnittenen Außenkonturlinie 147 folgt, und einen zweiten Außenkonturlinienabschnitt 152, welcher sich im Bereich der Ecke 146 des Dichtungsblechs 144 glatt an den ersten Außenkonturlinienabschnitt 150 des Dichtungsblechs 132 anschließt, so daß die Ecke 146 an dem Dichtungsblech 144 durch das Dichtungsblech 132 überdeckt wird und insgesamt eine glatte, abgerundete Außengeometrie der Metalldichtung 142 entsteht, die keine scharfen Außenkanten aufweist, welche eine Verletzungsgefahr bei der Handhabung der Metalldichtung 142 hervorrufen könnten.

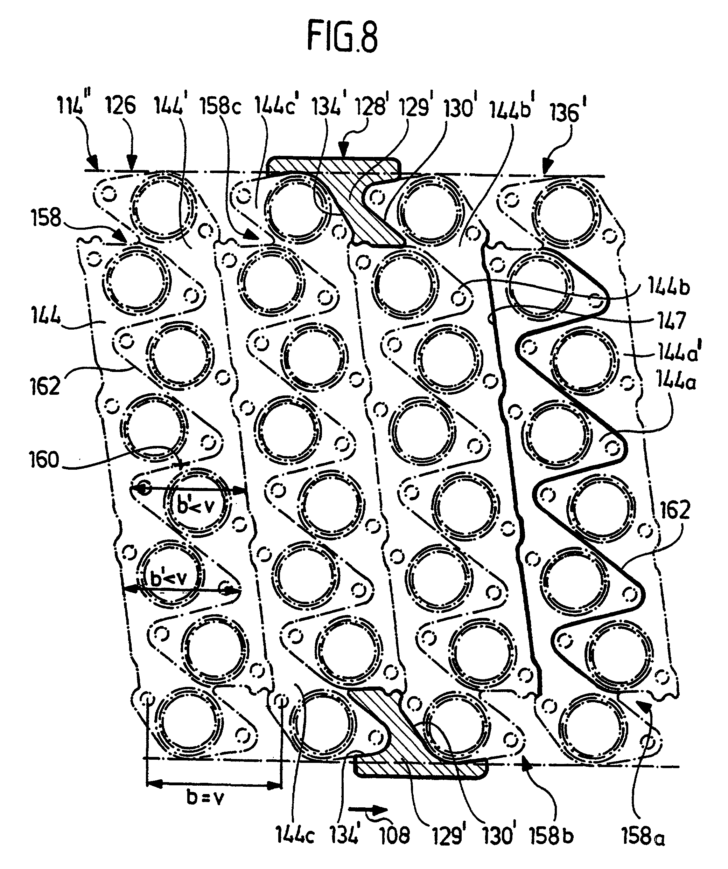

Fig. 8 zeigt schematisch die aufeinanderfolgenden Bearbeitungsschritte in einer zweiten Ausführungsform eines modifizierten Folgeverbundwerkzeugs 114'', bei welchem die Vorschubstrecke v gleich groß ist wie die Breite b der Außenkontur einer Gruppe 158 von Dichtungsblechen, welche zwei Dichtungsbleche 144 und 144' umfaßt.

Wie aus Fig. 8 zu ersehen ist, weist das zweite Dichtungsblech 144' dieselbe Außenkontur auf wie das erste Dichtungsblech 144 der Dichtungsblechgruppe 158, ist aber relativ zu dem ersten Dichtungsblech 144 um 180° gedreht und quer zu der Vorschubrichtung 108 relativ zu dem ersten Dichtungsblech 144 verschoben, so daß die beiden Dichtungsbleche 144, 144' derselben Dichtungsblechgruppe 158 bezüglich eines Punktes 160 punktsymmetrisch zueinander ausgebildet und angeordnet sind.

Die beiden Dichtungsbleche 144 und 144' derselben Dichtungsblechgruppe 158 grenzen längs miteinander zusammenfallender Außenkonturlinien 162 aneinander an.

Die Breite b der Außenkontur der Dichtungsblechgruppe 158 entspricht der Ausdehnung der Dichtungsblechgruppe 158 längs der Vorschubrichtung 108 und ist größer als die Breite b' der Außenkontur eines der Dichtungsbleche 144 oder 144', das heißt größer als die Ausdehnung des fertigen Dichtungsblechs 144 oder des fertigen Dichtungsblechs 144' längs der Vorschubrichtung 108.

Auch dieses modifizierte Folgeverbundwerkzeug 114'' umfaßt eine als Lochstation 126 ausgebildete erste Bearbeitungsstation, in welcher mittels geeigneter Stanzstempel die erforderlichen Durchgangsöffnungen in den Dichtungsblechen 144 und 144' erzeugt werden.

In einer längs der Vorschubrichtung 108 auf die Lochstation 126 folgenden zweiten Bearbeitungsstation, die als Freischneidstation 128' ausgebildet ist, werden mittels (beispielsweise) zweier Freischneidstempel zwei seitliche Freischneidflächen 129' aus dem Blech herausgeschnitten, deren vordere Ränder 130' Außenkonturlinien eines Dichtungsblechs 144b und eines Dichtungsblechs 144b' einer in der Vorschubrichtung 108 weiter vorne liegenden Dichtungsblechgruppe 158b bilden, während deren hintere Ränder 134' Außenkonturlinien eines Dichtungsblechs 144c und eines Dichtungsblechs 144c' einer in der Vorschubrichtung 108 weiter hinten liegenden Dichtungsblechgruppe 158c bilden.

In einer auf die Freischneidstation 128' folgenden Trennstation 136' werden mittels eines Trennstempels das Dichtungsblech 144a der in der Vorschubrichtung 108 weiter vorn liegenden Dichtungsblechgruppe 158a und das Dichtungsblech 144b' der in der Vorschubrichtung 108 weiter hinten liegenden Dichtungsblechgruppe 158b vollständig voneinander getrennt.

In derselben Trennstation 136' wird auch mittels eines Trennstempels das in der Vorschubrichtung 108 weiter vorn liegende zweite Dichtungsblech 144a' der Dichtungsblechgruppe 158a von dem in der Vorschubrichtung 108 weiter hinten liegenden Dichtungsblech 144a der Dichtungsblechgruppe 158a vollständig getrennt.

Die einander benachbarten Dichtungsbleche 144a und 144b', die zu verschiedenen Dichtungsblechgruppen 158a bzw. 158b gehören, einerseits und die beiden zur selben Dichtungsblechgruppe 158a gehörenden Dichtungsbleche 144a und 144a' andererseits können entweder mit zwei verschiedenen Trennstempeln oder mittels verschiedener Schneidkanten desselben Trennstempels voneinander getrennt werden.

In jedem Falle werden die miteinander zusammenfallenden Außenkonturlinien 147 der einander benachbarten Dichtungsbleche 144a, 144b' von ein und derselben Schneidkante geschnitten.

Ebenso werden die miteinander zusammenfallenden Außenkonturlinien 162 der zu derselben Dichtungsblechgruppe 158a gehörenden Dichtungsbleche 144a, 144a' von ein und derselben Schneidkante geschnitten.

Die Schneidkanten des Trennstempels oder der Trennstempel der Trennstation 136' des Folgeverbundwerkzeugs 114'' tauchen beim Trennvorgang in die von der Freischneidstation 128' geschnittenen seitlichen Freischneidflächen 129' ein, so daß die Außenkonturlinien 147 der Dichtungsbleche 144a, 144b' und die Außenkonturlinien 162 der zur Dichtungsblechgruppe 158a gehörenden Dichtungsbleche 144a, 144a' sauber geschnitten werden und die Ränder dieser Dichtungsbleche nicht verbogen werden.

Im übrigen stimmt die zweite Ausführungsform eines modifizierten Folgeverbundwerkzeugs 114'' hinsichtlich Aufbau und Funktion mit der ersten Ausführungsform eines modifizierten Folgeverbundwerkzeugs 114' überein, auf deren vorstehende Beschreibung insoweit Bezug genommen wird.

## Patentansprüche

1. Vorrichtung zum Herstellen von Dichtungslagen (144) für ein- oder mehrlagige Dichtungen (142) aus jeweils einem Dichtungslagenabschnitt (124') eines mehrere zusammenhängende Dichtungslagenabschnitte umfassenden Ausgangsmaterials, umfassend
ein Folgeverbundwerkzeug (114'; 114'') mit mehreren längs einer Vorschubrichtung (108) aufeinanderfolgenden Bearbeitungsstationen (122), in welchen die Dichtungslagenabschnitte (124') während Arbeitstakten bearbeitet werden, wobei mindestens eine der Bearbeitungsstationen (122) als eine Außenkonturlinien-Schneidstation ausgebildet ist, in welcher mittels eines Außenkonturlinien-Schneidwerkzeugs einander zugewandte Außenkonturlinien (147) zweier einander benachbarter Dichtungslagen (144a, 144b; 144a, 144b') geschnitten werden, und
eine Vorschubvorrichtung (106), durch welche die Dichtungslagenabschnitte (124') zwischen zwei Arbeitstakten um eine Vorschubstrecke (v) längs der Vorschubrichtung (108) weiterbewegt werden,
wobei das Außenkonturlinien-Schneidwerkzeug so ausgebildet ist, daß die Außenkonturlinien der beiden einander benachbarten Dichtungslagen (144a, 144b; 144a, 144b') mit derselben Schneidkante geschnitten werden, und wobei die Vorschubstrecke (v) im wesentlichen gleich groß ist wie die Ausdehnung (b) der Außenkontur einer fertigen Dichtungslage (144) oder einer Gruppe (158) von fertigen Dichtungslagen (144, 144') längs der Vorschubrichtung (108), und
wobei mindestens eine der Bearbeitungsstationen (122) als Freischneidstation (128') ausgebildet ist, die in der Vorschubrichtung (108) vor der Außenkonturlinien-Schneidstation angeordnet ist und mindestens ein Freischneidwerkzeug umfaßt, dessen Schneidkante einen eckenfreien Verlauf aufweist und mittels welchem in der Freischneidstation (128') aus dem Ausgangsmaterial mindestens eine Freischneidfläche (129') herausgeschnitten wird, in welche die Schneidkante des Außenkonturlinien-Schneidwerkzeugs der Außenkonturlinien-Schneidstation beim Schneidvorgang eintaucht.

2. Vorrichtung nach Anspruch 1, **dadurch gekennzeichnet, daß** das Freischneidwerkzeug der Freischneidstation (128) so ausgebildet ist, daß der Rand der Freischneidfläche (129') quer zu den von dem Außenkonturlinien-Schneidwerkzeug geschnittenen Außenkonturlinien (147) verläuft.

3. Vorrichtung nach Anspruch 2, **dadurch gekennzeichnet, daß** das Freischneidwerkzeug der Freischneidstation (128) so ausgebildet ist, daß der Rand der Freischneidfläche (129') im wesentlichen senkrecht zu den von dem Außenkonturlinien-Schneidwerkzeug geschnittenen Außenkonturlinien (147) verläuft.

4. Vorrichtung nach einem der Ansprüche 1 bis 3, **dadurch gekennzeichnet, daß** die Außenkonturlinien-Schneidstation als Trennstation (136') ausgebildet ist, in welcher die einander benachbarten Dichtungslagen (144a, 144b; 144a, 144b') vollständig voneinander getrennt werden.

5. Vorrichtung nach Anspruch 4, **dadurch gekennzeichnet, daß** die Außenkonturlinien-Schneidstation die in der Vorschubrichtung (108) letzte Bearbeitungsstation (122) des Folgeverbundwerkzeugs (114'; 114'') ist.

6. Vorrichtung nach einem der Ansprüche 1 bis 5, **dadurch gekennzeichnet, daß** die die Schneidkante (152) bildenden Flächen (154, 156) des Außenkonturlinien-Schneidwerkzeugs miteinander einen Winkel von ungefähr 90° einschließen.

7. Vorrichtung nach einem der Ansprüche 1 bis 6, **dadurch gekennzeichnet, daß** die Vorschubstrecke (v) im wesentlichen gleich groß ist wie die Ausdehnung (b) der Außenkontur einer Gruppe (158) von fertigen Dichtungslagen (144; 144') und daß mindestens eine der Bearbeitungsstationen (122) als Trennstation (136') ausgebildet ist, in welcher einander benachbarte Dichtungslagen der Gruppe vollständig voneinander getrennt werden.

8. Verfahren zum Herstellen von Dichtungslagen (144) für ein- oder mehrlagige Dichtungen (142) aus jeweils einem Dichtungslagenabschnitt (124') eines mehrere zusammenhängende Dichtungslagenabschnitte umfassenden Ausgangsmaterials, bei dem die Dichtungslagenabschnitte (124') in einem Folgeverbundwerkzeug (114'; 114'') mit mehreren längs einer Vorschubrichtung (108) aufeinanderfolgenden Bearbeitungsstationen (122) während Arbeitstakten bearbeitet werden, wobei mindestens eine der Bearbeitungsstationen als eine Außenkonturlinien-Schneidstation ausgebildet ist, in welcher mittels eines Außenkonturlinien-Schneidwerkzeugs einander zugewandte Außenkonturlinien (147) zweier einander benachbarter Dichtungslagen (144a, 144b; 144a, 144b') geschnitten werden, und
bei dem die Dichtungslagenabschnitte (124') zwischen zwei Arbeitstakten mittels einer Vorschubvorrichtung (106) um eine Vorschubstrecke (v) längs der Vorschubrichtung (108) weiterbewegt werden,
wobei die Außenkonturlinien (147) der beiden einander benachbarten Dichtungslagen (144a, 144b; 144a, 144b') mit derselben Schneidkante des Außenkonturlinien-Schneidwerkzeugs geschnitten werden und wobei die Vorschubstrecke (v) im wesentlichen gleich groß gewählt wird wie die Ausdehnung (b) der Außenkontur einer fertigen Dichtungslage (144) oder einer Gruppe (158) von fertigen Dichtungslagen (144, 144') längs der Vorschubrichtung (108), und
wobei mindestens eine der Bearbeitungsstationen (122) als Freischneidstation (128') ausgebildet ist, die in der Vorschubrichtung (108) vor der Außenkonturlinien-Schneidstation angeordnet ist und in der mittels mindestens eines Freischneidwerkzeugs, dessen Schneidkante einen eckenfreien Verlauf aufweist, aus dem Ausgangsmaterial mindestens eine Freischneidfläche (129') herausgeschnitten wird, in welche die Schneidkante des Außenkonturlinien-Schneidwerkzeugs der Außenkonturlinien-Schneidstation beim Schneidvorgang eintaucht.

9. Verfahren nach Anspruch 8, **dadurch gekennzeichnet, daß** die Freischneidfläche (129') von dem Freischneidwerkzeug der Freischneidstation (128) so geschnitten wird, daß der Rand der Freischneidfläche (129') quer zu den von dem Außenkonturlinien-Schneidwerkzeug geschnittenen Außenkonturlinien (147) verläuft.

10. Verfahren nach Anspruch 9, **dadurch gekennzeichnet, daß** die Freischneidfläche (129') von dem Freischneidwerkzeug der Freischneidstation (128') so geschnitten wird, daß der Rand der Freischneidfläche (129') im wesentlichen senkrecht zu den von dem Außenkonturlinien-Schneidwerkzeug geschnittenen Außenkonturlinien (147) verläuft.

11. Verfahren nach einem der Ansprüche 8 bis 10, **dadurch gekennzeichnet, daß** die einander benachbarten Dichtungslagen (144) in der als Trennstation (136') ausgebildeten Außenkonturlinien-Schneidstation vollständig voneinander getrennt werden.

12. Verfahren nach Anspruch 11, **dadurch gekennzeichnet, daß** die Außenkonturlinien-Schneidstation die in der Vorschubrichtung (108) letzte Bearbeitungsstation (122) des Folgeverbundwerkzeugs (114'; 114'') ist.

13. Verfahren nach einem der Ansprüche 8 bis 12, **dadurch gekennzeichnet, daß** die Außenkonturlinien (147) in der Außenkonturlinien-Schneidstation mittels einer Schneidkante (152) geschnitten werden, die durch Flächen (154, 156) des Außenkonturlinien-Schneidwerkzeugs gebildet wird, welche miteinander einen Winkel von ungefähr 90° einschließen.

14. Verfahren nach einem der Ansprüche 8 bis 13, **dadurch gekennzeichnet, daß** die Vorschubstrecke (v) im wesentlichen gleich groß gewählt wird wie die Ausdehnung (b) der Außenkontur einer Gruppe (158) von fertigen Dichtungslagen (144, 144') und daß einander benachbarte Dichtungslagen der Gruppe (158) in einer Trennstation (136') vollständig voneinander getrennt werden.

15. Verfahren nach Anspruch 14, **dadurch gekennzeichnet, daß** die Gruppe (158) von Dichtungslagen mindestens zwei Dichtungslagen (144, 144') umfaßt, deren einander zugewandte Außenkonturlinien (162) mit derselben Schneidkante eines Außenkonturlinien-Schneidwerkzeugs geschnitten werden.

16. Verfahren nach einem der Ansprüche 14 oder 15, **dadurch gekennzeichnet, daß** die Gruppe (158) von Dichtungslagen mindestens zwei Dichtungslagen (144, 144') umfaßt, deren Außenkonturlinien im wesentlichen punktsymmetrisch zueinander ausgebildet sind.

## Claims

1. An apparatus for the manufacture of seal layers (144) for single-layer or multi-layer seals (142) from a respective seal layer portion (124') of a starting material comprising several contiguous seal layer portions, comprising
a follow-on composite tool (114'; 114") having several successive machining stations (122) in a feed direction (108), in which the seal layer portions (124') are machined during work cycles, with at least one of the machining stations (122) being constructed as an outer contour line cutting station, in which mutually facing outer contour lines (147) of two adjacent seal layers (144a, 144b; 144a, 144b') are cut by means of an outer contour line cutting tool, and
a feed device (106), by which the seal layer portions (124') are further moved between two work cycles by a feed distance (v) in the feed direction (108),
wherein the outer contour line cutting device is constructed so that the outer contour lines of the two adjacent seal layers (144a, 144b; 144a, 144b") are cut with the same cutting edge, and wherein the feed distance (v) is substantially the same size as the dimension (b) of the outer contour of a finished seal layer (144) or a group (158) of finished seal layers (144, 144') in the feed direction (108), and
wherein at least one of the machining stations (122) is constructed as a free cutting station (128'), which is disposed in front of the outer contour line cutting station in the feed direction (108) and comprises at least one free punch, the cutting edge of which comprises a corner-free shape and by means of which in the free cutting station (128') at least one free cutting face (129') is cut out of the starting material, into which the cutting edge of the outer contour line cutting tool of the outer contour cutting station dips during the cutting operation.

2. An apparatus according to Claim 1,
**characterised in that** the free punch of the free cutting station (128) is constructed so that the edge of the free cutting face (129') runs transversely to the outer contour lines (147) cut by the outer contour line cutting tool.

3. An apparatus according to Claim 2,
**characterised in that** the free punch of the free cutting station (128) is constructed so that the edge of the free cutting face (129') runs substantially perpendicularly to the outer contour lines (147) cut by the outer contour line cutting tool.

4. An apparatus according to one of Claims 1 to 3,
**characterised in that** the outer contour line cutting station is constructed as a separating station (136') in which the adjacent seal layers (144a, 144b; 144a, 144b') are completely separated from one another.

5. An apparatus according to Claim 4,
**characterised in that** the outer contour line cutting station is the last machining station (122) of the follow-on composite tool (144'; 144") in the feed direction (108).

6. An apparatus according to one of Claims 1 to 5,
**characterised in that** the faces (154, 156) of the outer contour line cutting tool that form the cutting edge (152) together enclose an angle of roughly 90°.

7. An apparatus according to one of Claims 1 to 6,
**characterised in that** the feed section (v) is substantially the same size as the dimension (b) of the outer contour of a group (158) of finished seal layers (144; 144')
and **in that** at least one of the machining stations (122) is constructed as a separating station (136'), in which adjacent seal layers of the group are completely separated from one another.

8. A method for the manufacture of seal layers (144) for single-layer or multi-layer seals (142) from a respective seal layer portion (124') of a starting material comprising several contiguous seal layer portions, during which the seal layer portions (124') are machined in a follow-on composite tool (114'; 114") having several successive machining stations (122) in a feed direction (108) during work cycles, whereby at least one of the machining stations is constructed as an outer contour line cutting station, in which mutually facing outer contour lines (147) of two adjacent seal layers (144a, 144b; 144a, 144b') are cut by means of an outer contour line cutting tool, and
during which the seal layer portions (124') are moved further in the feed direction (108) by a feed distance (v) between two work cycles by means of a feed device (106),
whereby the outer contour lines (147) of the two adjacent seal layers (144a, 144b; 144a, 144b') are cut with the same cutting edge of the outer contour line cutting tool and whereby the feed distance (v) is chosen substantially the same size as the dimension (b) of the outer contour of a finished seal layer (144) or of a group (158) of finished seal layers (144, 144') in the feed direction (108), and
whereby at least one of the machining stations (122) is constructed as a free cutting station (128'), which is disposed in front of the outer contour line cutting station in the feed direction (108) and in which by means of at least one free punch, the cutting edge of which has a corner-free shape, at least one free cutting face (129') is cut out of the starting material, into which the cutting edge of the outer contour line cutting tool of the outer contour line cutting station dips during the cutting operation.

9. A method according to Claim 8,
**characterised in that** the free cutting face (129') of the free punch of the free cutting station (128) is cut so that the edge of the free cutting face (129') runs transversely to the outer contour lines (147) cut by the outer contour line cutting tool.

10. A method according to Claim 9,
**characterised in that** the free cutting face (129') is cut by the free punch of the free cutting station (128') so that the edge of the free cutting face (129') runs substantially perpendicularly to the outer contour lines (147) cut by the outer contour line cutting tool.

11. A method according to one of Claims 8 to 10,
**characterised in that** the adjacent seal layers (144) are completely separated from one another in the outer contour line cutting station constructed as a separating station (136').

12. A method according to Claim 11,
**characterised in that** the outer contour line cutting station is the machining station (122) of the follow-on composite tool (114'; 114") that is the last in the feed direction.

13. A method according to one of Claims 8 to 12,
**characterised in that** the outer contour lines (147) are cut in the outer contour line cutting station by means of a cutting edge (152), which is formed by faces (154, 156) of the outer contour line cutting tool, which together enclose an angle of roughly 90°.

14. A method according to one of Claims 8 to 13,
**characterised in that** the feed section (v) is chosen substantially the same size as the dimension (b) of the outer contour of a group (158) of finished seal layers (144, 144')
and **in that** adjacent seal layers of the group (158) are completely separated from one another in a separating station (136').

15. A method according to Claim 14,
**characterised in that** the group (158) of seal layers comprises at least two seal layers (144, 144'), the mutually facing outer contour lines (162) of which are cut with the same cutting edge of an outer contour line cutting tool.

16. A method according to one of Claims 14 or 15,
**characterised in that** the group (158) of seal layers comprises at least two seal layers (144, 144'), the outer contour lines of which are constructed substantially point-symmetrically to one another.

## Revendications

1. Appareil pour réaliser des couches de joint d'étanchéité (144) pour des joints d'étanchéité (142) à une ou à plusieurs couches à partir d'un tronçon respectif de couche de joint (124') d'un matériau de départ comprenant plusieurs tronçons de couche de joint attachés les uns aux autres, comportant
- un outil à suivre composé (114' ; 114") comprenant plusieurs postes d'usinage (122) successifs le long d'une direction d'avance (108), dans lesquels les tronçons de couche de joint (124') sont usinés pendant des cycles de travail, l'un au moins des postes d'usinage (122) étant réalisé sous la forme d'un poste de coupe des lignes de contour extérieur, dans lequel des lignes de contour extérieur (147) tournées l'une vers l'autre de deux couches de joint voisines (144a, 144b ; 144a, 144b') sont coupées au moyen d'un outil de coupe des lignes de contour extérieur, et
- un dispositif d'avance (106) par lequel les tronçons de couche de joint (124') continuent à être transportés entre deux cycles de travail sur un trajet d'avance (v) le long de la direction d'avance (108),
- l'outil de coupe des lignes de contour extérieur étant réalisé de telle sorte que les lignes de contour extérieur des deux couches de joint mutuellement voisines (144a, 144b ; 144a, 144b') sont coupées par la même arête de coupe, le trajet d'avance (v) étant sensiblement égal à l'extension (b) du contour extérieur d'une couche de joint finie (144) ou d'un groupe (158) de couches de joint finies (144, 144') le long de la direction d'avance (108), et
- l'un au moins des postes d'usinage (122) étant réalisé sous la forme d'un poste de coupe de dégagement (128') qui est agencé en avant du poste de coupe des lignes de contour extérieur dans la direction d'avance (108) et qui comprend au moins un outil de coupe de dégagement dont l'arête de coupe présente un tracé dépourvu de coins et au moyen duquel au moins une surface coupée dégagée (129') est coupée dans le matériau de départ dans le poste de coupe de dégagement (128'), dans laquelle vient plonger l'arête de coupe de l'outil de coupe des lignes de contour extérieur du poste de coupe des lignes de contour extérieur lors de l'opération de coupe.

2. Appareil selon la revendication 1, **caractérisé en ce que** l'outil de coupe de dégagement du poste de coupe de dégagement (128) est réalisé de telle sorte que le bord de la surface coupée dégagée (129') s'étend transversalement aux lignes de contour extérieur (147) coupées par l'outil de coupe des lignes de contour extérieur.

3. Appareil selon la revendication 2, **caractérisé en ce que** l'outil de coupe de dégagement du poste de coupe de dégagement (128) est réalisé de telle sorte que le bord de la surface coupée dégagée (129') s'étend sensiblement perpendiculairement aux lignes de contour extérieur (147) coupées par l'outil de coupe des lignes de contour extérieur.

4. Appareil selon l'une des revendications 1 à 3, **caractérisé en ce que** le poste de coupe des lignes de contour extérieur est réalisé sous la forme d'un poste de séparation (136') dans lequel les couches de joint mutuellement voisines (144a, 144b ; 144a, 144b') sont complètement séparées les unes des autres.

5. Appareil selon la revendication 4, **caractérisé en ce que** le poste de coupe des lignes de contour extérieur est le dernier poste d'usinage (122) en direction d'avance (108) de l'outil à suivre composé (114' ; 114").

6. Appareil selon l'une des revendications 1 à 5, **caractérisé en ce que** les surfaces (154, 156) formant l'arête de coupe (152) de l'outil de coupe des lignes de contour extérieur définissent conjointement un angle d'environ 90°.

7. Appareil selon l'une des revendications 1 à 6, **caractérisé en ce que** le trajet d'avance (v) est sensiblement égal à l'extension (b) du contour extérieur d'un groupe (158) de couches de joint finies (144 ; 144'), et **en ce que** l'un au moins des postes d'usinage (122) est réalisé sous la forme d'un poste de séparation (136') dans lequel des couches de joint mutuellement voisines du groupe sont complémentent séparées l'une de l'autre.

8. Procède pour réaliser des couches de joint (144) pour des joints d'étanchéité (142) à une ou à plusieurs couches à partir d'un tronçon respectif de couche de joint (124') d'un matériau de départ comprenant plusieurs tronçons de couche de joint attachés les uns aux autres, dans lequel les tronçons de couche de joint (124') sont usinés dans un outil à suivre composé (114' ; 114") comprenant plusieurs postes d'usinage (122) successifs le long d'une direction d'avance (108) pendant des cycles de travail, l'un au moins des postes d'usinage étant réalisé sous la forme d'un poste de coupe des lignes de contour extérieur, dans lequel des lignes de contour extérieur (147) tournées lime vers l'autre de deux couches de joint voisines (144a, 144b ; 144a, 144b') sont coupées au moyen d'un outil de coupe des lignes de contour extérieur, et
- dans lequel les tronçons de couche de joint (124') continuent à être transportés entre deux cycles de travail sur un trajet d'avance (v) le long de la direction d'avance (108) au moyen d'un dispositif d'avance (106),
- les lignes de contour extérieur (147) des deux couches de joint mutuellement voisines (144a, 144b 144a, 144b') étant coupées par la même arête de coupe de l'outil de coupe des lignes de contour extérieur, et le trajet d'avance (v) étant choisi sensiblement égal à l'extension (b) du contour extérieur d'une couche de joint finie (144) ou d'un groupe (158) de couches de joint finies (144, 144') le long de la direction d'avance (108), et
- l'un au moins des postes d'usinage (122) étant réalisé sous la forme d'un poste de coupe de dégagement (128') qui est agencé en avant du poste de coupe des lignes de contour extérieur dans la direction d'avance (108) et dans lequel au moins une surface coupée dégagée (129') est coupée dans le matériau de départ au moyen d'au moins un outil de coupe de dégagement dont l'arête de coupe présente un tracé dépourvu de coins, surface dans laquelle vient plonger l'arête de coupe de l'outil de coupe des lignes de contour extérieur du poste de coupe des lignes de contour extérieur lors de l'opération de coupe.

9. Procédé selon la revendication 8, **caractérisé en ce que** la surface coupée dégagée (129') est coupée par l'outil de coupe de dégagement du poste de coupe de dégagement (128) de telle sorte que le bord de la surface coupée dégagée (129') s'étend transversalement aux lignes de contour extérieur (147) coupées par l'outil de coupe des lignes de contour extérieur.

10. Procédé selon la revendication 9, **caractérisé en ce que** la surface coupée dégagée (129') est coupée par l'outil de coupe de dégagement du poste de coupe de dégagement (128) de telle sorte que le bord de la surface coupée dégagée (129') s'étend sensiblement perpendiculairement aux lignes de contour extérieur (147) coupées par l'outil de coupe des lignes de contour extérieur.

11. Procédé selon l'une des revendications 8 à 10, **caractérisé en ce que** les couches de joint mutuellement voisines (144) sont complètement séparées l'une de l'autre dans le poste de coupe des lignes de contour extérieur réalisé sous forme de poste de séparation (136').

12. Procédé selon la revendication 11, **caractérisé en ce que** le poste de coupe des lignes de contour extérieur est le dernier poste d'usinage (122) en direction d'avance (108) de l'outil de à suivre composé (114' ; 114").

13. Procédé selon l'une des revendications 8 à 12, **caractérisé en ce que** les lignes de contour extérieur (147) sont coupées dans le poste de coupe des lignes de contour extérieur au moyen d'une arête de coupe (152) qui est formée par des surfaces (154, 156) de l'outil de coupe des lignes de contour extérieur, qui définissent conjointement un angle d'environ 90°.

14. Procédé selon l'une des revendications 8 à 13, **caractérisé en ce que** le trajet d'avance (v) est choisi sensiblement égal à l'extension (b) du contour extérieur d'un groupe (158) de couches de joint finies (144 ; 144'), et **en ce que** des couches de joint mutuellement voisines du groupe (158) sont complémentent séparées l'une de l'autre dans un poste de séparation (136').

15. Procédé selon la revendication 14, **caractérisé en ce que** le groupe (158) de couches de joint comprend au moins deux couches de joint (144, 144') dont les lignes de contour extérieur (162) tournées l'une vers l'autre sont coupées par la même arête de coupe d'un outil de coupe des lignes de contour extérieur.

16. Procédé selon l'une ou l'autre des revendications 14 et 15, **caractérisé en ce que** le groupe (158) de couches de joint comprend au moins deux couches de joint (144, 144') dont les lignes de contour extérieur sont réalisées sensiblement à symétrie ponctuelle l'une par rapport à l'autre.
